# EUROPEAN PATENT SPECIFICATION

(11) **EP 4 124 171 B1**
(45) Date of publication and mention of the grant of the patent: **31.12.2025**
(21) Application number: 22186535.5
(22) Date of filing: 22.07.2022
(51) Int. Cl.: H05B 1/02, H05B 3/14, H05B 3/26

(54) **METHOD FOR MODULATING AN ELECTRIC INFRARED HEATING PANEL**
VERFAHREN ZUM MODULIEREN EINER ELEKTRISCHEN INFRAROTWÄRMEPLATTE
PROCÉDÉ DE MODULATION DE PANNEAU DE CHAUFFAGE INFRAROUGE ÉLECTRIQUE

(30) Priority: 23.07.2021 NL 2028825
(43) Date of publication of application: 25.01.2023
(73) Proprietor: Greeniuz Holding B.V., 5652 AM Eindhoven (NL)
(72) Inventor: DE LEEDE, Gerardus Leonardus Antonius, EINDHOVEN (NL); BELLEMAKERS, Dirk Robertus Johannus, EINDHOVEN (NL); SLENDERS, Marco Carol Andries, EINDHOVEN (NL)
(74) Representative: Algemeen Octrooi- en Merkenbureau B.V.

(56) References cited:
- WO-A1-2017/213495
- KR-B1- 101 987 415
- US-A- 4 817 705
- US-A1- 2020 329 531

## Description

The present invention relates to a method for modulating an electric infrared heating panel in an area where the electric infrared heating panel is located. The present invention furthermore relates to a system for modulating an electric infrared heating panel in an area where the electric infrared heating panel is located, and also to a building provided with such a system.

Conventional heating in the home works by warming up the air around someone; for instance, a radiator does most of its heating through convection currents (it also gives off small amounts of infrared radiation). When the radiator warms up, it heats the air directly around it, which then expands and rises. As the warm air rises, it creates a vacuum behind it, which pulls colder air into contact with the radiator, causing it to heat up. As the warm air begins to cool down it drops down back to floor level. This chilly air gets heated again and this process keeps repeating itself - this is known as convection heating.

Most conventional heating systems do emit some infrared waves. Infrared heating is an addition to the domestic and commercial heating scene. It is emitted from the heater, which then travels unimpeded through the air until it hits an object. The object absorbs the radiation, causing molecules within it to vibrate, producing heat. If the waves come into contact with humans, they will travel into the body providing a feeling of deep heat, but even if a person is not directly in the way of the waves, any solid body will vibrate when the waves hit them, causing them to radiate heat back towards that person.

A benefit of using electric infrared panels in the home, is that there is no need to integrate any pipe work or fuel storage facilities when installing the panels. There are also no direct emissions associated with using the electrical panels and by using them in conjunction with solar panels there is 100% emission free heating. In addition electric infrared panels can be placed high up on the walls or the ceiling, so they will be easy to keep away from pets and children. Infrared heating thus works by heating the surface area of a room, rather than the volume (as is the case the traditional convection heaters), which means they are heating considerably less to provide the same amount of heat. In addition, conventional heaters warm the room by convection currents that circulate dust particles continuously around the home, however these convection currents do not occur with infrared heating, so for people who suffer from asthma, infrared panels can be the ideal solution. In addition, electric infrared panels create a comfortable room temperature without dust, drafts or noise, and significantly improve indoor climate.

Electric infrared panels also only take a short time to reach full operating temperature and therefore are much more efficient at heating a space than conventional space heating heaters. The heat is also contained in the thermal mass of the room surfaces, as opposed to the heat. This means that it stays warmer for longer and draughts do not play as large a part when compared with convection heaters.

Electric infrared panels that are now available on the market are modulated according to a two steps control scheme. In fact, such a two steps control scheme comprises an on-off modulation. A temperature sensor in the room measures the temperature and in case the measured temperature is below its set point, the maximum power (the "on" situation) is applied on the heating module, i.e. the rigid, plate -like, electrically insulating carrier provided with a CNT (Carbon Nano Tube) coating. At a certain moment, the temperature sensor in the room measures a temperature that is above its set point and subsequently the power is reduced to zero (the "off" situation). Such a way of modulation will result in an uneven temperature profile in the room where the electric infrared panel is located.

International application WO2017213495 discloses an infrared heating module, comprising a rigid, plate -like, electrically insulating carrier having a low thermal expansion coefficient in a predetermined temperature range, a CNT coating on the carrier, comprising carbon nano tubes, and an electrical connection in contact with the CNT coating to apply a voltage over the CNT coating. The electrical connection comprises at least one electrically conductive, elongate member in the form of a strip of copper paint, applied on and extending over the CNT coating.

In addition, KR20120032080 teaches a portable cooling and heating device wherein a CNT discharge plate is provided to prevent unnecessary power consumption by cooling and heating only desired spaces. Such a portable cooling and heating device using a CNT discharge plate comprises a base panel, a case, a discharge unit, and a power supply unit. The power supply unit is installed in one side of the inner top end of the case and supplies power to the discharge unit.

US 2016/001632 relates to automotive sheet heater comprising: a stacked structure of a far-infrared radiating layer, a metal layer, a metal wire-containing carbon nanotube heating layer, and an electrode layer, which is electrically connected to the carbon nanotube heating layer and induces heat emission of the carbon nanotube heating layer when power is applied thereto, wherein the far-infrared radiating layer emits radiant heat due to heat emission of the carbon nanotube heating layer.

Infrared heating plates as such are also disclosed in CN 207569971, CN 106912119 and WO2009079890.

EP 3 822 544 relates to an infrared heating panel comprising a power supply for powering the heating panel and/or a control element for switching on the heating panel. Such an electric, heating panel comprises a glass plate with a front and an opposite back wherein the back comprises a coat of paint, a layer with metal strips, and an electric heating layer, wherein the electric heating layer contains a binder with one or more conductive additives distributed therein, wherein the binder of the heating layer is a non-conductive polymer selected from the group consisting of graphite, carbon black and a combination of the two and the metal strips are copper strips.

German Gebrauchsmusterschrift DE 20 2004 003 511 U1 relates to a circuit arrangement with an adjustable amount of electrical output power for panel heating, wherein the output power (P) of the circuit arrangement can only be switched back and forth periodically in the manner of an on-off control between an upper (Pₘₐₓ) and a lower limit value (0). The point in time (tₛ) of switching between the two limit values (Pₘₐₓ; 0) within a predetermined base period (T) for setting the power quantity can be varied by means of a manual input unit, wherein the upper limit value (Pₘₐₓ) corresponds to the maximum power and the lower limit value corresponds to an output power of zero.

EP 0 298 415 relates to a method of thermostatic control of a temperature modifying apparatus, comprising the following steps: measuring the ambient temperature, generating an error signal based upon the difference between a set point temperature and the measured ambient temperature, operating the temperature modifying apparatus proportional to the error signal, and adjusting the set point temperature based upon the time history of the error signal, wherein the adjustment of the set point temperature is in a direction away from the measured ambient temperature if the time history of the error signal indicates a generally increasing error signal and in a direction toward the measured ambient temperature if the time history of the error signal indicates a generally decreasing error signal.

US 4,817,705 relates to a method of thermostatic control of a temperature modifying apparatus comprising the steps of measuring the ambient temperature, generating an error signal based upon the difference between a set point temperature and the measured ambient temperature, operating the temperature modifying apparatus proportional to the error signal, and adjusting the set point temperature in a direction away from the measured ambient temperature if the time history of the error signal indicates a generally increasing error signal and in a direction toward the measured ambient temperature if the time history of the error signal indicates a generally decreasing error signal.

US 2020/329531 relates to an electrical radiator type heating apparatus having a case containing an electric power storage device, first linking elements linking the electric power storage device to an electric power supply source external to the apparatus, at least one heater member producing a flow of calories when an input of the heater member is supplied by an electric voltage, second linking elements linking the input of the heater member to an output of the electric power storage device and third linking elements linking the input of the heater member to the electric power supply source, wherein the first linking elements comprise first connecting elements linking the output of the electric power storage device to the electric power supply source.

KR 2018/0115378 relates to radiation heater comprises a heat insulation plate and a heating body film, and a plurality of planar heating elements installed on the insulation plate and generating heat by receiving power to emit radiant heat, wherein the plurality of planar heating elements include carbon nanotube particles and graphite particles as conductive particles.

An aspect of the existing infrared heating panel is the modulation of the radiant heat output. The input energy is electricity and that electricity is transferred to radiant heat in an on-off modulation strategy.

An object of the present invention is to provide a method for modulating an electric infrared heating panel wherein the panel temperature fluctuations are reduced to a minimum.

Another object of the present invention is to provide a method for modulating an electric infrared heating panel wherein the energy consumption of the electric infrared heating panel is reduced compared to a standard "on-off" method for modulating an electric infrared heating panel.

The present invention thus relates to a method for modulating an electric infrared heating panel in an area where the electric infrared heating panel is located, the electric infrared heating panel comprising a frame in which an infrared heating module is positioned, the infrared heating module comprising a rigid, plate-like, electrically insulating carrier provided with a CNT coating comprising carbon nano tubes on the carrier, an electrical connection in contact with the CNT coating to apply a voltage over the CNT coating, and a ceramic front plate, the method comprising the following steps:
i) setting a set point temperature Tₛₑₜ for the air in the area where the electric infrared heating panel is located;
ii) measuring the temperature Tₐᵢᵣ, of the air in the area where the electric infrared heating panel is located;
iii) calculating ΔT, wherein ΔT= (Tₛₑₜ - Tₐᵢᵣ) in °C;
iv)adjusting of the applied voltage over the CNT coating on basis of the calculated value for ΔT of step iii).

On basis of such a method for modulating an electric infrared heating panel one or more objects are achieved. The present inventor found that by using the present method the panel temperature fluctuations are reduced to a minimum. In addition, the energy consumption when using such a method is reduced compared to a method wherein the modulation takes place between 0% and 100% of the maximum power, wherein 100% of the maximum power is applied when ΔT= (Tₛₑₜ - Tₐᵢᵣ) >= 0°C and 0 % of the maximum power is applied when ΔT= (Tₛₑₜ - Tₐᵢᵣ) < 0°C.

It is to be noted that the present invention is explicitly related to a method for modulating an electric infrared heating panel and all other types or systems for heating a room are excluded, i.e. conventional heating systems, such as a central furnace to provide heat, wherein a furnace blows heated air through ducts that deliver the warm air to rooms throughout the house via air registers or grills, also identified as ducted warm-air or forced warm-air distribution system that can be powered by electricity, natural gas, or fuel oil, or boiler systems that distribute the heat in hot water, which gives up heat as it passes through radiators or other devices in rooms throughout the house, or heat pumps, such as air-source heat pumps that use the outside air as the heat source in winter and heat sink in summer.

In an example the applied voltage is adjusted on basis of the value of ΔT, wherein the applied voltage is a % of the maximum power, wherein the applied voltage is 0% of the maximum power when ΔT < 0°C and the applied voltage is 100% of the maximum power when ΔT > 1,0 °C.

In an example the applied voltage is between 0 and 100% of the maximum power when ΔT is between 0 and 1,0 °C.

According to the invention, step iv) is subdivided into several intervals, comprising adjusting the applied voltage between 0 and 50% of the maximum power when ΔT is between 0 and 0,5 °C and adjusting the applied voltage between 50% and 100% of the maximum power when ΔT is between 0,5 and 1,0 °C.

In an example step iv) is subdivided into several intervals, comprising adjusting the applied voltage between 0 and 20% of the maximum power when ΔT is between 0 and 0,25 °C, adjusting the applied voltage between 20% and 50% of the maximum power when ΔT is between 0,25 and 0,50 °C, adjusting the applied voltage between 50 and 80% of the maximum power when ΔT is between 0,50 and 0,75 °C, and adjusting the applied voltage between 80% and 100% of the maximum power when ΔT is between 0,75 and 1,00 °C.

To get the correct power from electric infrared heating panel, three types of control techniques can be used, i.e. Pulse Wide Modulation, wherein the full voltage is supplied, only the time unit varies, Phase cut, wherein the sine wave of the main voltage is cut off in such a way that the signal has less efficiency with the connected element, and Phase cut-off, wherein the sine wave of the mains voltage is cut off in such a way that the signal has less efficiency when the element is connected.

The present invention also relates to a system for modulating an electric infrared heating panel in an area where the electric infrared heating panel is located, the electric infrared heating panel comprising a frame in which an infrared heating module is positioned, the infrared heating module comprising a rigid, plate-like, electrically insulating carrier provided with a CNT coating comprising carbon nano tubes on the carrier, an electrical connection in contact with the CNT coating to apply a voltage over the CNT coating, and a ceramic front plate, the system comprising:
a) an apparatus for setting a set point temperature Tₛₑₜ for the air in the area where the electric infrared heating panel is located;
b) an apparatus for measuring the temperature Tₐᵢᵣ of the air in the area where the electric infrared heating panel is located;
c) an apparatus for calculating ΔT, wherein ΔT= (Tₛₑₜ - Tₐᵢᵣ) in °C;
d) an apparatus for adjusting the applied voltage over the CNT coating on basis of the calculated value for ΔT of step c), wherein step d) is subdivided into several intervals, comprising adjusting the applied voltage between 0 and 50% of the maximum power when ΔT is between 0 and 0,5 °C and adjusting the applied voltage between 50% and 100% of the maximum power when ΔT is between 0,5 and 1,0 °C.

In an example of the system the transfer of information chosen from one or more of the group of the set point temperature Tₛₑₜ, the temperature Tₐᵢᵣ of the air and ΔT, is carried out via a wireless connection.

The present invention also relates to a building provided with a system for modulating an electric infrared heating panel as discussed above.

In an example of such a building one or more of the electric infrared heating panels are mounted on the ceiling and/or wall of said building.

An example of a heating panel has been disclosed in Dutch patent application NL 2024534 in the name of the present applicant. NL 2024534 discloses an electric infrared heating panel, comprising a frame in which a heating module is positioned, said heating module comprising a rigid, plate-like, electrically insulating carrier provided with a CNT coating comprising carbon nano tubes on said carrier, an electrical connection in contact with the CNT coating to apply a voltage over the CNT coating, said panel further comprising a back plate, an insulation plate, and a ceramic front plate. The heating module is positioned between the ceramic front plate and the insulation plate, wherein between the ceramic front plate and the insulation plate a heat distribution plate is positioned.

The presence of such a heat distribution plate ensures a uniform distribution of heat thereby spreading the radiant heat at the edges of the front plate smoothly and hence maximizing the far infrared equality. The insert of the heat distribution plate between the ceramic front plate and the insulation plate eliminates the low temperatures at the edges of the front plate of an infrared heat panel. Such a distribution plate is a plate that is in close contact with the heating module and warms up and ensures a better temperature distribution over the entire front panel of the heating panel. An essential property of the material used for such a heat distribution plate is heat conductivity, possibly in combination with dimensional stability, such as aluminum, brass, bronze, copper, gold and silver and its alloys. A preferred embodiment of a heat distribution plate is an aluminum foil having a thickness in a range of 0,1 mm - 5 mm.

The heat distribution plate may be positioned between the ceramic front plate and the heating module, or the heat distribution plate may be positioned between the heating module and the insulation plate, and such a heat distribution plate is a plate that is in close contact with the heating module.

The manufacturing of a heating module comprising a rigid, plate -like, electrically insulating carrier provided with a CNT coating comprising carbon nano tubes on the carrier may be carried out according to the method disclosed in WO 2017/213495.

The heat distribution plate may comprise a plate that partially covers the heating module, or the heat distribution plate may comprise a plate that only covers the peripheral edges of the heating module. The heat distribution plate may also comprise a plate that covers the electrical connection in contact with the CNT coating. Such a plate can be seen as a frame or passe-partout that covers the peripheral edges of the heating module, especially the electrical connection in contact with the CNT coating.

The function of the insulation plate is to prevent the build-up of heat at the back plate.

An elastic strip may be provided between the frame and the ceramic front plate thereby achieving a close fit of the ceramic front plate and the frame itself. An elastic strip may also be provided between the insulation plate and the back plate thereby achieving a close fit of the insulation plate and the back plate in the frame itself. The frame can be made of lightweight materials, such as plastics, metals, for example aluminum.

In practice such an electric infrared heating panel will be located in a room where a heating necessity exist, for example in a living room, sleeping room, bath room, garage, veranda, and kitchen. Although mainly indoor applications have been mentioned here, such an electric infrared heating panel can also be used in outdoor applications, such as in a terrace of a restaurant, building or bar.

The present inventors found that according to the present method for modulating an electric infrared heating panel in an area where the electric infrared heating panel is located the power supplied to the panel will become smaller and smaller the closer the temperature of the air get to the set point temperature. In some situations the room temperature will not be reached if the heat loss in the room is equal to the power supplied at that moment. For example, if there is a temperature difference of, for example, 0.1-0.2 below the measured room temperature compared to the set temperature, the set temperature will not be reached. As a result, the (final) measured room temperature will remain just below the set point temperature, while the electric infrared heating panel still supplies minimal power and therefore radiation. If other heat influences come into play, such as several people in the same room, the effect of sunlight, an increase in outside temperature etc., the set point will indeed be reached and the control system will switch off the electric infrared heating panel completely. If these influences disappear again, the room temperature will drop and the present control system will function according to present method. Thus, there might be a situation in practice that the electric infrared heating panel is continuously controlled for only a part, e.g. 50-80%, and that the room temperature remains at e.g. 0.2-0.4 degrees below the set point. This creates a pleasant feeling of temperature in the room where the electric infrared heating panel is located.

For the purpose of promoting an understanding of the principles of the present invention, reference will now be made to the embodiments illustrated in the figures. It will, nevertheless, be understood that no limitation of the scope of the disclosure is thereby intended; any alterations and further modifications of the described or illustrated embodiments, and any further applications of the principles of the disclosure as illustrated therein are contemplated as would normally occur to one skilled in the art to which the invention relates. It is noted here that the disclosure is by no means to be interpreted as limited to any merely preferred features, unless essential for proper functioning as defined in the claims, where the scope of protection may even include obvious alternatives for specifically recited features in the appended independent claims.
Figure 1 shows a temperature profile of an electric infrared heating panel modulated according to an on-off strategy.
Figure 2 shows a temperature profile of an electric infrared heating panel modulated according to a four steps modulation strategy.
Figure 3 shows a temperature profile of an electric infrared heating panel modulated according to a six steps modulation strategy.

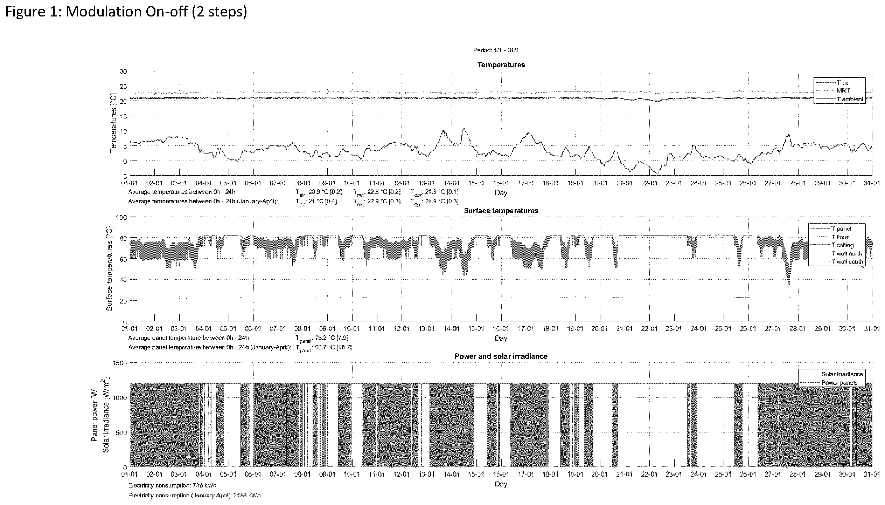

An electric infrared heating panel according to Figure 1 of Dutch patent application NL 2024534 was used. The simulation settings were as follows: heating set point: 21°C, constant heating set point (no setback period during nights), ventilation rate: 1 ACH, no occupancy in the room and max power: 1200W. The simulation period was during January - April, the weather file originates from Beek (The Netherlands) and simulation time step was 5 min.

From Figure 1 (see the graph in the middle) it is clear that the temperature of the electric infrared heating panel showed strong fluctuations.

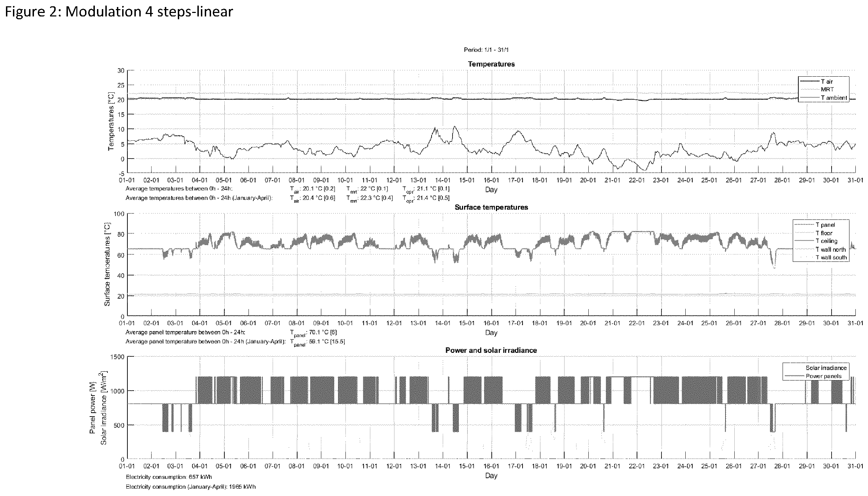

From Figure 2 (see the graph in the middle) it is clear that the temperature fluctuations of the electric infrared heating panel are much smaller than the temperature fluctuations of the electric infrared heating panel shown in Figure 1. The strategy for a four steps modulation is shown in Table 1.

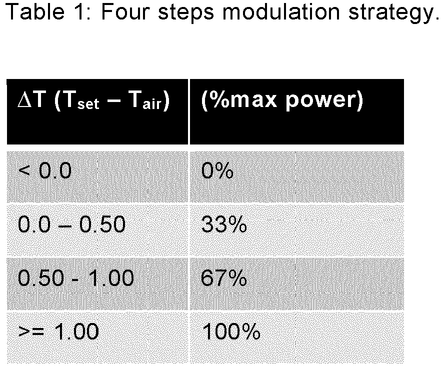

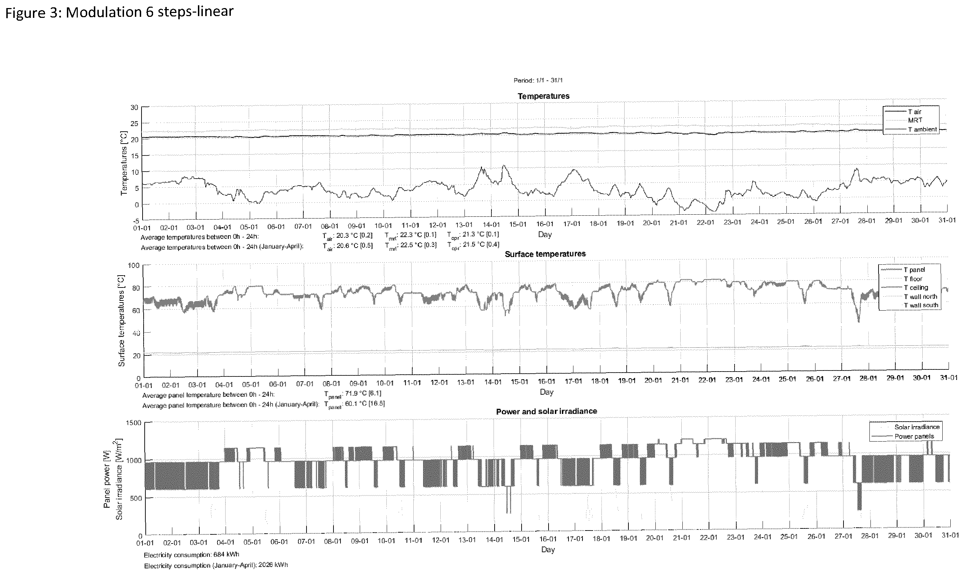

From Figure 3 (see the graph in the middle) it is clear that the temperature fluctuations of the electric infrared heating panel are much smaller than the temperature fluctuations of the electric infrared heating panel shown in Figure 2. The strategy for six steps modulation is shown in Table 2.

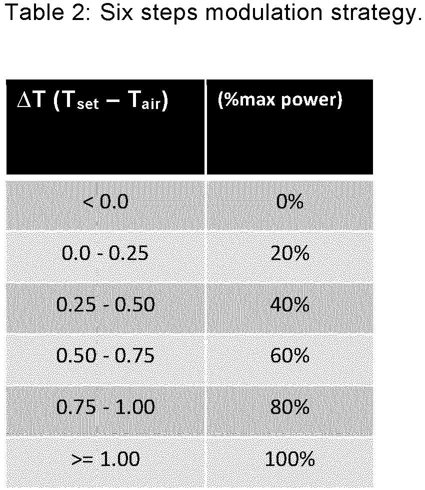

From the experimental data it is clear that the present method for modulating an electric infrared heating panel resulted in a reduction of the temperature fluctuations of the electric infrared heating panel.

## Claims

1. A method for modulating an electric infrared heating panel in an area where the electric infrared heating panel is located, the electric infrared heating panel comprising a frame in which an infrared heating module is positioned, the infrared heating module comprising a rigid, plate-like, electrically insulating carrier provided with a CNT coating comprising carbon nano tubes on the carrier, an electrical connection in contact with the CNT coating to apply a voltage over the CNT coating, and a ceramic front plate, the method comprising the following steps:
i) setting a set point temperature Tₛₑₜ for the air in the area where the electric infrared heating panel is located;
ii) measuring the temperature Tₐᵢᵣ of the air in the area where the electric infrared heating panel is located;
iii) calculating ΔT, wherein ΔT= (Tₛₑₜ - Tₐᵢᵣ) in °C;
iv) adjusting of the applied voltage over the CNT coating on basis of the calculated value for ΔT of step iii), wherein step iv) is subdivided into several intervals, comprising adjusting the applied voltage between 0 and 50% of the maximum power when ΔT is between 0 and 0,5 °C and adjusting the applied voltage between 50% and 100% of the maximum power when ΔT is between 0,5 and 1,0 °C.

2. A method according to claim 1, wherein the applied voltage is adjusted on basis of the value of ΔT, wherein the applied voltage is a % of the maximum power, wherein the applied voltage is 0% of the maximum power when ΔT < 0 °C and the applied voltage is 100% of the maximum power when ΔT > 1,0 °C.

3. A method according to any one or more of the preceding claims, wherein step iv) is subdivided into several intervals, comprising adjusting the applied voltage between 0 and 20% of the maximum power when ΔT is between 0 and 0,25 °C, adjusting the applied voltage between 20% and 50% of the maximum power when ΔT is between 0,25 and 0,50 °C, adjusting the applied voltage between 50 and 80% of the maximum power when ΔT is between 0,50 and 0,75 °C, and adjusting the applied voltage between 80% and 100% of the maximum power when ΔT is between 0,75 and 1,00 °C.

4. A system for modulating an electric infrared heating panel in an area where the electric infrared heating panel is located, the electric infrared heating panel comprising a frame in which an infrared heating module is positioned, the infrared heating module comprising a rigid, plate-like, electrically insulating carrier provided with a CNT coating comprising carbon nano tubes on the carrier, an electrical connection in contact with the CNT coating to apply a voltage over the CNT coating, and a ceramic front plate, the system comprising:
a) an apparatus for setting a set point temperature Tₛₑₜ for the air in the area where the electric infrared heating panel is located;
b) an apparatus for measuring the temperature Tₐᵢᵣ of the air in the area where the electric infrared heating panel is located;
c) an apparatus for calculating ΔT, wherein ΔT= (Tₛₑₜ - Tₐᵢᵣ) in °C;
d) an apparatus for adjusting the applied voltage over the CNT coating on basis of the calculated value for ΔT of step c), wherein step d) is subdivided into several intervals, comprising adjusting the applied voltage between 0 and 50% of the maximum power when ΔT is between 0 and 0,5 °C and adjusting the applied voltage between 50% and 100% of the maximum power when ΔT is between 0,5 and 1,0 °C.

5. A system according to claim 4, wherein the transfer of information chosen from one or more of the group of the set point temperature Tₛₑₜ, the temperature Tₐᵢᵣ of the air and ΔT, is carried out via a wireless connection.

6. A building provided with a system for modulating an electric infrared heating panel according to any one or more of claims 4-5.

7. A building according to claim 6, wherein one or more of said electric infrared heating panels are mounted on the ceiling and/or wall of said building.

## Patentansprüche

1. Verfahren zum Modulieren einer elektrischen Infrarotwärmeplatte in einem Bereich, in dem sich die elektrische Infrarotwärmeplatte befindet, wobei die elektrische Infrarotwärmeplatte einen Rahmen umfasst, in dem ein Infrarotwärmemodul positioniert ist, wobei das Infrarotwärmemodul einen starren, plattenartigen, elektrisch isolierenden Träger, der mit einer CNT-Beschichtung, die Kohlenstoffnanoröhren umfasst, auf dem Träger versehen ist, eine elektrische Verbindung in Kontakt mit der CNT-Beschichtung, um eine Spannung über die CNT-Beschichtung anzulegen, und eine keramische Frontplatte umfasst, wobei das Verfahren die folgenden Schritte umfasst:
i) Festlegen einer Solltemperatur T_{Soll} für die Luft in dem Bereich, in dem sich die elektrische Infrarotwärmeplatte befindet;
ii) Messen der Temperatur T_{Luft} der Luft in dem Bereich, in dem sich die elektrische Infrarotwärmeplatte befindet;
iii) Berechnen von ΔT, wobei ΔT= (T_{Soll} - T_{Luft}) in °C ist;
iv) Einstellen der angelegten Spannung über der CNT-Beschichtung basierend auf dem berechneten Wert für ΔT von Schritt iii), wobei Schritt iv) in mehrere Intervalle unterteilt wird, umfassend Einstellen der angelegten Spannung zwischen 0 und 50 % der maximalen Leistung, wenn ΔT zwischen 0 und 0,5 °C liegt, und Einstellen der angelegten Spannung zwischen 50 % und 100 % der maximalen Leistung, wenn ΔT zwischen 0,5 und 1,0 °C liegt.

2. Verfahren nach Anspruch 1, wobei die angelegte Spannung basierend auf dem Wert von ΔT eingestellt wird, wobei die angelegte Spannung ein % der maximalen Leistung ist, wobei die angelegte Spannung 0 % der maximalen Leistung ist, wenn ΔT < 0 °C ist, und die angelegte Spannung 100 % der maximalen Leistung ist, wenn ΔT > 1,0 °C ist.

3. Verfahren nach einem oder mehreren der vorhergehenden Ansprüche, wobei Schritt iv) in mehrere Intervalle unterteilt ist, umfassend Einstellen der angelegten Spannung zwischen 0 und 20 % der maximalen Leistung, wenn ΔT zwischen 0 und 0,25 °C liegt, Einstellen der angelegten Spannung zwischen 20 % und 50 % der maximalen Leistung, wenn ΔT zwischen 0,25 und 0,50 °C liegt, Einstellen der angelegten Spannung zwischen 50 und 80 % der maximalen Leistung, wenn ΔT zwischen 0,50 und 0,75 °C liegt, und Einstellen der angelegten Spannung zwischen 80 % und 100 % der maximalen Leistung, wenn ΔT zwischen 0,75 und 1,00 °C liegt.

4. System zum Modulieren einer elektrischen Infrarotwärmeplatte in einem Bereich, in dem sich die elektrische Infrarotwärmeplatte befindet, wobei die elektrische Infrarotwärmeplatte einen Rahmen umfasst, in dem ein Infrarotwärmemodul positioniert ist, wobei das Infrarotwärmemodul einen starren, plattenartigen, elektrisch isolierenden Träger, der mit einer CNT-Beschichtung, die Kohlenstoffnanoröhren umfasst, auf dem Träger versehen ist, eine elektrische Verbindung in Kontakt mit der CNT-Beschichtung, um eine Spannung über die CNT-Beschichtung anzulegen, und eine keramische Frontplatte umfasst, wobei das System umfasst:
a) eine Einrichtung zum Festlegen einer Solltemperatur T_{Soll} für die Luft in dem Bereich, in dem sich die elektrische Infrarotwärmeplatte befindet;
b) eine Vorrichtung zum Messen der Temperatur T_{Luft} der Luft in dem Bereich, in dem sich die elektrische Infrarotwärmeplatte befindet;
c) eine Einrichtung zum Berechnen von ΔT, wobei ΔT= (T_{Soll} - T_{Luft}) in °C ist;
d) eine Einrichtung zum Einstellen der angelegten Spannung über der CNT-Beschichtung basierend auf dem berechneten Wert für ΔT von Schritt c), wobei Schritt d) in mehrere Intervalle unterteilt wird, umfassend Einstellen der angelegten Spannung zwischen 0 und 50 % der maximalen Leistung, wenn ΔT zwischen 0 und 0,5 °C liegt, und Einstellen der angelegten Spannung zwischen 50 % und 100 % der maximalen Leistung, wenn ΔT zwischen 0,5 und 1,0 °C liegt.

5. System nach Anspruch 4, wobei die Übertragung von Informationen, die aus einer oder mehreren aus der Gruppe der Solltemperatur T_{Soll}, der Temperatur T_{Luft} der Luft und ΔT ausgewählt sind, über eine drahtlose Verbindung durchgeführt wird.

6. Gebäude, das mit einem System zum Modulieren einer elektrischen Infrarotwärmeplatte nach einem oder mehreren der Ansprüche 4-5 versehen ist.

7. Gebäude nach Anspruch 6, wobei eine oder mehrere der elektrischen Infrarotwärmeplatten an der Decke und/oder Wand des Gebäudes montiert sind.

## Revendications

1. Procédé de modulation d'un panneau de chauffage infrarouge électrique dans une zone où se trouve le panneau de chauffage infrarouge électrique, le panneau de chauffage infrarouge électrique comprenant un cadre dans lequel est positionné un module de chauffage infrarouge, le module de chauffage infrarouge comprenant un support rigide, en forme de plaque, électriquement isolant, pourvu d'un revêtement CNT comprenant des nanotubes de carbone sur le support, une connexion électrique en contact avec le revêtement CNT pour appliquer une tension sur le revêtement CNT, et une plaque frontale en céramique, le procédé comprenant les étapes suivantes :
i) le réglage d'une température de consigne Tₛₑₜ pour l'air dans la zone où se trouve le panneau de chauffage infrarouge électrique ;
ii) la mesure de la température Tₐᵢᵣ de l'air dans la zone où se trouve le panneau de chauffage infrarouge électrique ;
iii) le calcul de ΔT, où ΔT = (Tₛₑₜ - Tₐᵢᵣ) en °C ;
iv) l'ajustement de la tension appliquée sur le revêtement CNT sur la base de la valeur calculée pour ΔT à l'étape iii), où l'étape iv) est subdivisée en plusieurs intervalles, comprenant l'ajustement de la tension appliquée entre 0 et 50% de la puissance maximale lorsque ΔT est entre 0 et 0,5°C et l'ajustement de la tension appliquée entre 50% et 100% de la puissance maximale lorsque ΔT est entre 0,5 et 1,0°C.

2. Procédé selon la revendication 1, dans lequel la tension appliquée est ajustée sur la base de la valeur de ΔT, dans lequel la tension appliquée est un % de la puissance maximale, dans lequel la tension appliquée est de 0% de la puissance maximale lorsque ΔT < 0°C et la tension appliquée est de 100% de la puissance maximale lorsque ΔT > 1,0°C.

3. Procédé selon l'une quelconque ou plusieurs des revendications précédentes, dans lequel l'étape iv) est subdivisée en plusieurs intervalles, comprenant l'ajustement de la tension appliquée entre 0 et 20% de la puissance maximale lorsque ΔT est entre 0 et 0,25°C, l'ajustement de la tension appliquée entre 20% et 50% de la puissance maximale lorsque ΔT est entre 0,25 et 0,50°C, l'ajustement de la tension appliquée entre 50 et 80% de la puissance maximale lorsque ΔT est entre 0,50 et 0,75°C, et l'ajustement de la tension appliquée entre 80% et 100% de la puissance maximale lorsque ΔT est entre 0,75 et 1,00°C.

4. Système de modulation d'un panneau de chauffage infrarouge électrique dans une zone où se trouve le panneau de chauffage infrarouge électrique, le panneau de chauffage infrarouge électrique comprenant un cadre dans lequel est positionné un module de chauffage infrarouge, le module de chauffage infrarouge comprenant un support rigide, en forme de plaque, électriquement isolant, pourvu d'un revêtement CNT comprenant des nanotubes de carbone sur le support, une connexion électrique en contact avec le revêtement CNT pour appliquer une tension sur le revêtement CNT, et une plaque frontale en céramique, le système comprenant :
a) un appareil pour régler une température de consigne Tₛₑₜ pour l'air dans la zone où se trouve le panneau de chauffage infrarouge électrique ;
b) un appareil pour mesurer la température Tₐᵢᵣ de l'air dans la zone où se trouve le panneau de chauffage infrarouge électrique ;
c) un appareil pour calculer ΔT, où ΔT = (Tₛₑₜ - Tₐᵢᵣ) en °C ;
d) un appareil pour ajuster la tension appliquée sur le revêtement CNT sur la base de la valeur calculée pour ΔT à l'étape c), où l'étape d) est subdivisée en plusieurs intervalles, comprenant l'ajustement de la tension appliquée entre 0 et 50% de la puissance maximale lorsque ΔT est entre 0 et 0,5°C et l'ajustement de la tension appliquée entre 50% et 100% de la puissance maximale lorsque ΔT est entre 0,5 et 1,0°C.

5. Système selon la revendication 4, dans lequel le transfert d'informations choisies parmi une ou plusieurs du groupe de la température de consigne Tₛₑₜ, de la température Tₐᵢᵣ de l'air et ΔT, est effectué via une connexion sans fil.

6. Bâtiment équipé d'un système de modulation d'un panneau de chauffage infrarouge électrique selon l'une quelconque ou plusieurs des revendications 4 et 5.

7. Bâtiment selon la revendication 6, dans lequel un ou plusieurs desdits panneaux de chauffage infrarouges électriques sont montés sur le plafond et/ou un mur dudit bâtiment.
